(19) **Europäisches Patentamt / European Patent Office / Office européen des brevets**

(11) **EP 4 700 345 A1**

(12) **EUROPEAN PATENT APPLICATION**
published in accordance with Art. 153(4) EPC

(43) Date of publication:
**25.02.2026 Bulletin 2026/09**

(21) Application number: **24811166.8**

(22) Date of filing: **23.05.2024**

(51) International Patent Classification (IPC):
**G01H 17/00** (2006.01)   **G01M 99/00** (2011.01)

(52) Cooperative Patent Classification (CPC):
**G01H 17/00; G01M 99/00**

(86) International application number:
**PCT/JP2024/018942**

(87) International publication number:
**WO 2024/242160 (28.11.2024 Gazette 2024/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **24.05.2023 JP 2023085170**

(71) Applicant: **JFE Steel Corporation
Tokyo, 100-0011 (JP)**

(72) Inventors:
• **MAEDA, Takafumi**
  **Tokyo 100-0011 (JP)**
• **HIRATA, Takehide**
  **Tokyo 100-0011 (JP)**
• **SATO, Ken**
  **Tokyo 100-0011 (JP)**
• **TAKADA, Motoki**
  **Tokyo 100-0011 (JP)**

(74) Representative: **Hoffmann Eitle
Patent- und Rechtsanwälte PartmbB
Arabellastraße 30
81925 München (DE)**

(54) **ACOUSTIC DIAGNOSTIC DEVICE AND ACOUSTIC DIAGNOSTIC METHOD**

(57) An acoustic diagnosis device according to the present invention includes: an operational sound collecting unit that collects operational sound of the equipment; an in-operational-segment operational sound extracting unit that extracts operational sound for each of predetermined operational segments of the equipment from the operational sound collected by the operational sound collecting unit; a sound pressure level acquiring unit that acquires a sound pressure level for each of predetermined frequency bands for each of the operational segments with respect to operational sound for each of the operational segments extracted by the in-operational-segment operational sound extracting unit; a degree-of-deviation calculating unit that calculates a degree of deviation of the sound pressure level for each of the operational segments and each of the frequency bands acquired by the sound pressure level acquiring unit from a sound pressure level of the same equipment, a same operational segment, and a same frequency band during normal operation; and an abnormal part specifying unit that specifies an abnormal part of the equipment on a basis of the degree of deviation calculated by the degree-of-deviation calculating unit.

FIG.1

EP 4 700 345 A1

## Description

Field

The present invention relates to an acoustic diagnosis device and an acoustic diagnosis method for specifying an abnormal part of equipment using an acoustic signal during operation of the equipment.

Background

Patent Literature 1 describes a diagnostic device that performs diagnosis on a diagnosis target by comparing an observed waveform of an acoustic signal observed from the diagnosis target with a reference waveform. Patent Literature 2 describes a state estimation device that estimates a change in the state of equipment on the basis of a waveform and frequency information detected by a plurality of sensors provided in the equipment. Patent Literature 3 describes a diagnostic device that detects chattering of a rolling roll using the frequency of an acoustic signal detected by an acoustic sensor provided in a rolling mill.

Citation List

Patent Literature

Patent Literature 1: JP 2008-164490 A
Patent Literature 2: WO 2019/017345 A
Patent Literature 3: WO 2020/157818 A

Summary

Technical Problem

In the devices described in Patent Literatures 1 to 3, particularly for equipment including a plurality of components, there is a possibility that an abnormal part of the equipment cannot be accurately specified. Specifically, in a case where the equipment includes a plurality of components such as a bearing, a reducer, a crank, a mold, a roll, and a block, the timing at which operational sound is generated varies depending on the component. Therefore, unless the timing and the frequency at which the abnormal sound has been generated are taken into consideration, it is not possible to know from which component the abnormal sound has been generated, and there is a possibility that an abnormal part of the equipment cannot be accurately specified.

The present invention has been made to solve the above problem, and an object thereof is to provide an acoustic diagnosis device and an acoustic diagnosis method capable of accurately specifying an abnormal part of equipment.

Solution to Problem

To solve the problem and achieve the object, an acoustic diagnosis device according to the present invention is the device that specifies an abnormal part of equipment using an acoustic signal during operation of the equipment. The acoustic diagnosis device includes: an operational sound collecting unit that collects operational sound of the equipment; an in-operational-segment operational sound extracting unit that extracts operational sound for each of predetermined operational segments of the equipment from the operational sound collected by the operational sound collecting unit; a sound pressure level acquiring unit that acquires a sound pressure level for each of predetermined frequency bands for each of the operational segments with respect to operational sound for each of the operational segments extracted by the in-operational-segment operational sound extracting unit; a degree-of-deviation calculating unit that calculates a degree of deviation of the sound pressure level for each of the operational segments and each of the frequency bands acquired by the sound pressure level acquiring unit from a sound pressure level during normal operation of the same equipment, a same operational segment, and a same frequency band; and an abnormal part specifying unit that specifies an abnormal part of the equipment on a basis of the degree of deviation calculated by the degree-of-deviation calculating unit.

Moreover, the sound pressure level acquiring unit may acquire the sound pressure level by classifying each of operational sounds on a basis of predetermined operating conditions of the equipment, and the degree-of-deviation calculating unit may calculate the degree of deviation of the sound pressure level for each of the operational segments, each of the frequency bands, and each of the operating conditions acquired by the sound pressure level acquiring unit from the sound pressure level during the normal operation of the same equipment, the same operational segment, the same frequency band, and a same operating condition.

Moreover, the abnormal part specifying unit may specify the abnormal part of the equipment on a basis of a pattern of deviations having the degree of deviation in each of the frequency bands obtained for each of the operational segments as an element.

Moreover, the acoustic diagnosis device may further include a database unit that stores: extraction conditions for the operational sound of the equipment; and data necessary for specifying the abnormal part of the equipment, and the abnormal part specifying unit may specify the abnormal part of the equipment by referring to a table stored in the database unit, the table including information indicating a relationship between: the operational segments and the pattern of deviations; and abnormal parts of the equipment.

Moreover, the table may include information indicating a relationship between: the operational segments, the pattern of deviations, and operating conditions of the equipment; and abnormal parts of the equipment, and the abnormal part specifying unit may specify the abnormal part of the equipment in consideration of the operational segments, the pattern of deviations, and the operating conditions of the equipment by referring to the table.

Moreover, the acoustic diagnosis device may further include: a normal sound pressure level acquiring unit that acquires a sound pressure level for each of predetermined frequency bands for each of the operational segments with respect to the operational sound for each of the operational segments extracted by the in-operational-segment operational sound extracting unit; and a normal-operation distribution determining and recording unit that classifies the sound pressure level acquired by the normal sound pressure level acquiring unit for each of the equipment, each of the operational segments, and each of the frequency bands and records the classified sound pressure level as the sound pressure level during the normal operation of the equipment.

Moreover, the normal-operation distribution determining and recording unit may record, for each of the equipment, a table including information indicating a relationship between: the pattern of deviations, the pattern of deviations having, as an element, a degree of deviation of a sound pressure level from the sound pressure level during the normal operation in each of the frequency bands obtained for each of the operational segments; and the abnormal parts of the equipment.

Moreover, the normal-operation distribution determining and recording unit may record a table including information indicating a relationship between: the operational segments, the pattern of deviations, and the operating conditions of the equipment; and the abnormal parts of the equipment.

Moreover, the operational segments may be determined in association with operation time of the equipment or an operation position of a component device of the equipment.

Moreover, the operational segments may be determined, for a sensor signal installed in the equipment, the sensor being capable of identifying a change point of operation of the equipment, on a basis of confirmation of division positions by: designation of an assumed value of a number of divisions based on knowledge about operation of the equipment; and change point extraction by a machine learning method using data of the sensor signal or change point extraction by data classification by a clustering technique.

Moreover, an acoustic diagnosis method according to the present invention is the method for specifying an abnormal part of equipment using an acoustic signal during operation of the equipment. The acoustic diagnosis method includes: an operational sound collecting step of collecting operational sound of the equipment; an in-operational-segment operational sound extracting step of extracting operational sound for each of predetermined operational segments of the equipment from the operational sound collected in the operational sound collecting step; a sound pressure level acquiring step of acquiring a sound pressure level for each of predetermined frequency bands for each of the operational segments with respect to operational sound for each of the operational segments extracted in the in-operational-segment operational sound extracting step; a degree-of-deviation calculating step of calculating a degree of deviation of the sound pressure level for each of the operational segments and each of the frequency bands acquired in the sound pressure level acquiring step from a sound pressure level during a normal operation of the same equipment, a same operational segment, and a same frequency band; and an abnormal part specifying step of specifying an abnormal part of the equipment on a basis of the degree of deviation calculated in the degree-of-deviation calculating step.

Moreover, the acoustic diagnosis method may further include: a normal sound pressure level acquiring step of acquiring a sound pressure level for each of predetermined frequency bands for each of the operational segments with respect to the operational sound for each of the operational segments extracted in the in-operational-segment operational sound extracting step; and a normal-operation distribution determining and recording step of classifying the sound pressure level acquired in the normal sound pressure level acquiring step for each of the equipment, each of the operational segments, and each of the frequency bands and recording the classified sound pressure level as the sound pressure level during the normal operation of the equipment.

Advantageous Effects of Invention

According to an acoustic diagnosis device and an acoustic diagnosis method according to the present invention, an abnormal part of equipment is specified on the basis of the sound pressure level for each operational segment and each frequency band of the equipment, and thus the abnormal part of the equipment can be accurately specified.

Brief Description of Drawings

FIG. 1 is a block diagram illustrating the configuration of an acoustic diagnosis device as an embodiment of the present invention.
FIG. 2 is a flowchart illustrating the flow of data recording processing as an embodiment of the present invention.
FIG. 3 is a diagram for describing data recording processing according to an embodiment of the present invention.
FIG. 4 is a diagram for explaining a sound pressure signal extraction method in a case where sound pressure signal extraction conditions are specified using a crank angle.
FIG. 5 is a graph illustrating an example of the change in the sound pressure level of operational sounds in one frequency band with respect to the crank angle.
FIG. 6 is a diagram illustrating a classification example of operational sounds illustrated in FIG. 5.
FIG. 7 is a flowchart illustrating the flow of abnormal part specifying processing as an embodiment of the present invention.
FIG. 8 is a diagram for explaining a specific example of abnormal part specifying processing according to an embodiment of the present invention.
FIG. 9 is a diagram for explaining the abnormal part specifying processing of the embodiment.
FIG. 10 is a diagram illustrating frequency distributions of sound pressure levels in a case where operating conditions of press equipment are limited and in a case where the operating conditions are not limited.
FIG. 11 is a diagram for explaining abnormal part specifying processing of an example.

Description of Embodiments

Hereinafter, an acoustic diagnosis device and an acoustic diagnosis method as embodiments of the present invention will be described with reference to the drawings.

[Configuration]

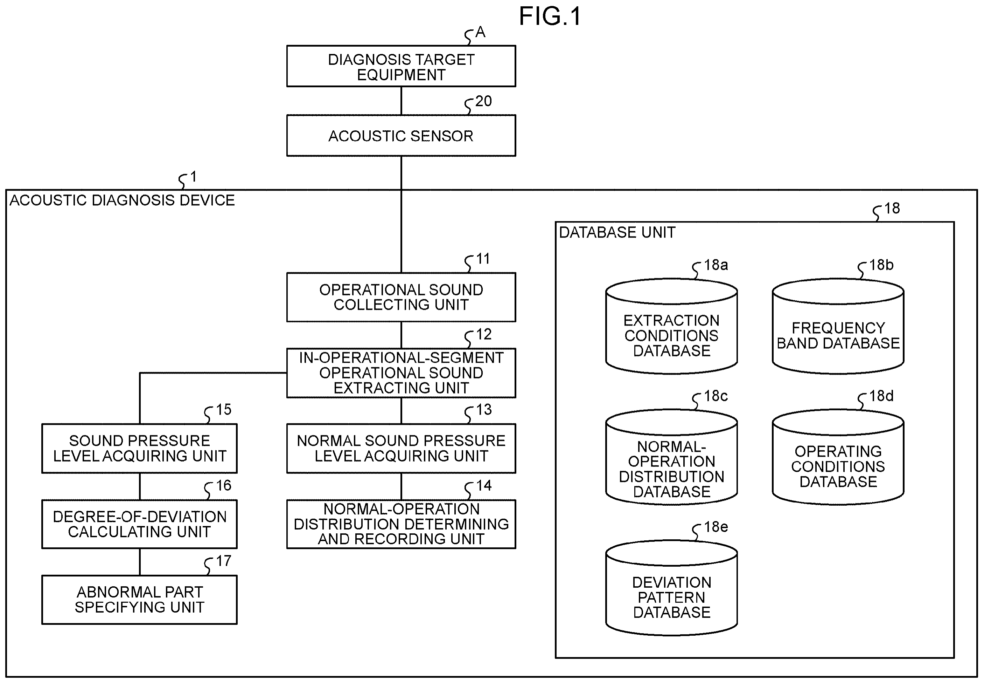

FIG. 1 is a block diagram illustrating the configuration of an acoustic diagnosis device as an embodiment of the present invention. As illustrated in FIG. 1, an acoustic diagnosis device 1 as an embodiment of the present invention is a device that specifies an abnormal part of one or more pieces of diagnosis target equipment (hereinafter, abbreviated as equipment) A determined in advance using an acoustic signal at the time of operation of the equipment A, and includes an information processing device such as a computer. Note that the equipment A includes a plurality of components, and examples of such equipment include steel manufacturing equipment such as press equipment and rolling equipment.
The acoustic diagnosis device 1 includes an operational sound collecting unit 11, an in-operational-segment operational sound extracting unit 12, a normal sound pressure level acquiring unit 13, a normal-operation distribution determining and recording unit 14, a sound pressure level acquiring unit 15, a degree-of-deviation calculating unit 16, an abnormal part specifying unit 17, and a database unit 18. The operational sound collecting unit 11, the in-operational-segment operational sound extracting unit 12, the normal sound pressure level acquiring unit 13, the normal-operation distribution determining and recording unit 14, the sound pressure level acquiring unit 15, the degree-of-deviation calculating unit 16, and the abnormal part specifying unit 17 are functional blocks implemented by an arithmetic processing device such as a CPU inside the information processing device executing a computer program. The function of each of the units will be described later.
The database unit 18 includes a storage device such as an HDD included in the information processing device, and includes an extraction conditions database 18a, a frequency band database 18b, a normal-operation distribution database 18c, an operating conditions database 18d, and a deviation pattern database 18e. Details of each of the databases will be described later. Note that the database unit 18 may be disposed outside the acoustic diagnosis device 1, and the acoustic diagnosis device 1 may acquire data from the database unit 18 via an electric communication line.
The acoustic diagnosis device 1 having such a configuration specifies an abnormal part of the equipment A by executing data recording processing and abnormal part specifying processing described below. Hereinafter, the operation of the acoustic diagnosis device 1 when executing the data recording processing and the abnormal part specifying processing will be described.

[Data Recording Processing]

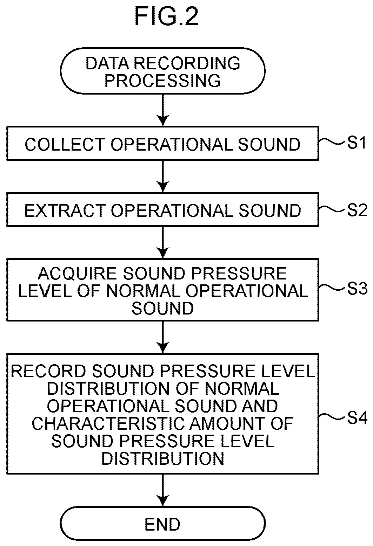

FIG. 2 is a flowchart illustrating the flow of data recording processing as an embodiment of the present invention. The flowchart illustrated in FIG. 2 starts at the timing when an execution command of the data recording processing is input to the acoustic diagnosis device 1, and the data recording processing proceeds to processing of step S1.

In the processing of step S1, the operational sound collecting unit 11 collects a sound pressure signal of the operational sound of the equipment A within a predetermined period during normal operation including k types (k ≥ 1) of operational segments of the equipment A having been classified in advance using an acoustic sensor 20 such as a microphone installed in the vicinity of the equipment A at predetermined time intervals. As a result, the processing of step S1 is completed, and the data recording processing proceeds to processing of step S2.

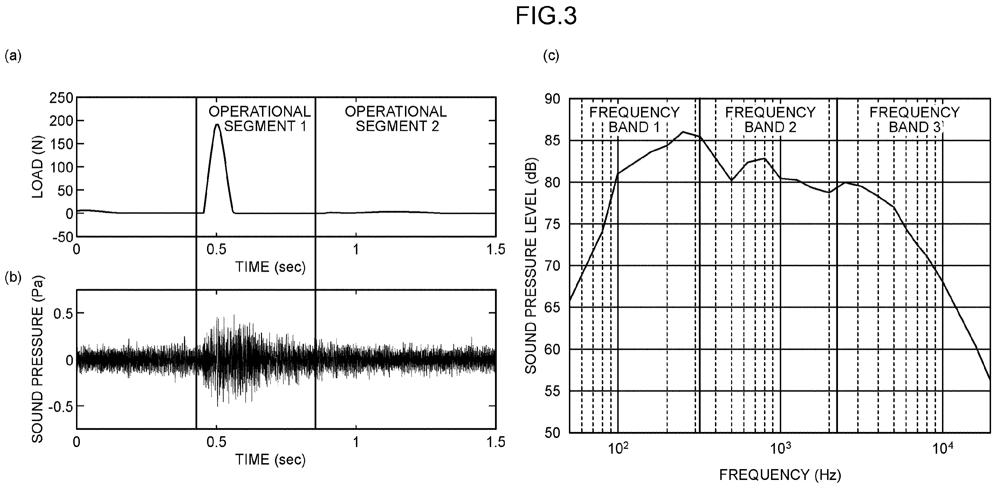

In the processing of step S2, the in-operational-segment operational sound extracting unit 12 extracts the sound pressure signal for each of the k types of operational segments from the sound pressure signal collected in the processing of step S1. Specifically, the in-operational-segment operational sound extracting unit 12 reads extraction conditions (extraction start time, extraction end time, and the like) of the sound pressure signal for each of the k types of operational segments from the extraction conditions database 18a. For example, in an example illustrated in FIG. 3(a), the in-operational-segment operational sound extracting unit 12 reads, as extraction conditions, information regarding start time and end time of an operational segment 1 in which the load rises and returns to a predetermined value and start time and end time of an operational segment 2 during which the load is maintained at the predetermined value. Then, the in-operational-segment operational sound extracting unit 12 extracts the sound pressure signal satisfying the extraction conditions from the sound pressure signal collected in the processing of step S1, thereby extracting the sound pressure signal for each of the k types of operational segments (see FIG. 3(b)).

The extraction conditions of the sound pressure signal are not limited to the specification method using the start time and the end time of the operational segment and may be specified on the basis of the operation position of the target equipment. For example, in the case of press equipment for working a workpiece by pressing a mold against the workpiece using a crank mechanism, the operational segment of the press equipment can be specified by the size of the crank angle in contact with the workpiece. Specifically, let that a crank angle when the workpiece first comes into contact with the mold be $\alpha$ and a crank angle when the workpiece is separated from the mold be $\beta$, the press operational segment can be specified by the crank angles $\alpha$ and $\beta$. In addition, in a case where there is processing after the press operation (for example, the operation of a conveyor or the like), the operational segment of processing after the pressing can be specified by using a crank angle larger than the crank angle $\beta$. Therefore, in this case, the extraction conditions of the sound pressure signal can be specified using the crank angle. In a case where the extraction conditions of the sound pressure signal are specified on the basis of the operation position of the target equipment, information associating the extraction conditions with the operation position of the equipment may be recorded and stored in the extraction conditions database 18a to cope with the specification.

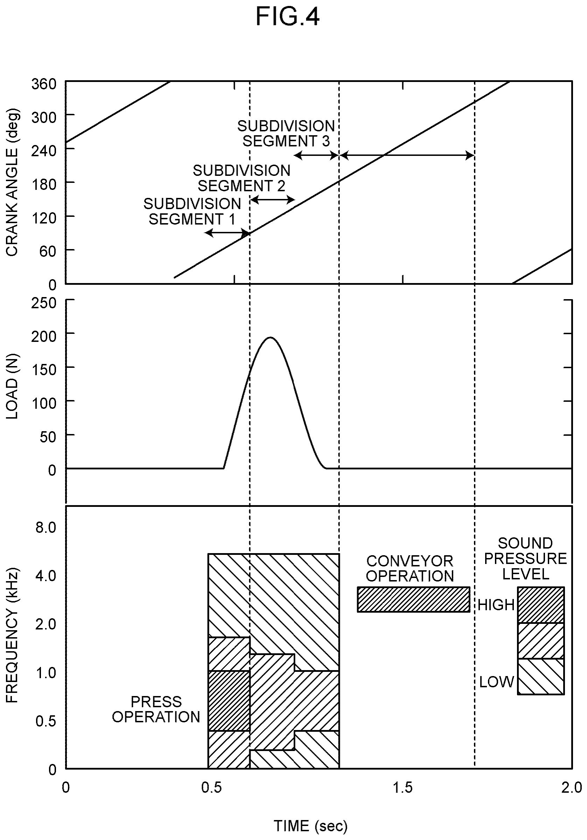

FIG. 4 is a diagram for explaining a sound pressure signal extraction method in a case where extraction conditions of a sound pressure signal are specified using the crank angle. The crank angle $\alpha$ when the workpiece first comes into contact with the mold can be derived from the geometric relationship between the workpiece and the crank mechanism. In an example illustrated in FIG. 4, a press operational segment in which a press load is applied to the workpiece is divided into a plurality of segments (subdivision segments 1 to 3), and the sound pressure signal is extracted in each of the subdivision segments. When the sound pressure signal is extracted, since the crank angle uniquely corresponds to the start time and the end time of each of the subdivision segments, it suffices to extract the sound pressure signal within the range of the crank angle.

As described above, the time and the operation position for specifying the operational segment can be determined in consideration of the relationship between the product manufacturing processes for each piece of equipment and the operation of the equipment; however, it is not easy to specify a segment in which characteristic sound can be effectively extracted by the time or the operation position. In such a case, the operational segment may be specified using information regarding a change point of a sensor signal indicating a change in the equipment operation. For example, in the case of the above-described press equipment, since the start timing and the like of the press operation can be detected by the change in the load of the press load, a subdivision segment may be specified using a load cell signal for detecting the press load. Specifically, in the example illustrated in FIG. 4, the load signal indicates the change in the load cell signal, and it is possible to specify subdivision segments including a segment in which the load signal is maximized in addition to each of the rising and falling positions of the load signal. As described above, the position of each operational segment can be specified in association with the operation position such as the time or the crank angle and the change point of the sensor signal of a load cell or the like indicating a change in the equipment operation as described above.

In addition, the operational segment can also be specified by using classification technique based on a combination of the knowledge related to the equipment operation and data of the generation position of the operational sound associated with the equipment operation. There is a case where a plurality of operational sounds are generated even in one equipment operation, and even in such a case, the diagnosis accuracy can be improved by classifying the generation pattern of the operational sounds associated with the equipment operation. For example, in the case of press equipment, an operation from pressing a workpiece with a mold to returning is defined as one equipment operation; however, the operational sound can be classified by subdividing the process by the crank angle or the like. Specifically, an operational segment can be specified as follows on the basis of prior knowledge of the press operation.

(1) Segment in which the workpiece is conveyed: Operational sound is generated by the conveyor.
(2) Segment in which the workpiece and a mold come into contact with each other: Operational sound is generated by friction or impact vibration when the workpiece and the mold come into contact with each other. The operational sound is a sound in which the workpiece and the mold come into contact with each other.
(3) Segment in which the workpiece and the mold are separated: Operational sound is generated by operation or vibration when the crank mechanism moves. The operational sound corresponds to vibration or friction sound when the crank mechanism or the mold moves.

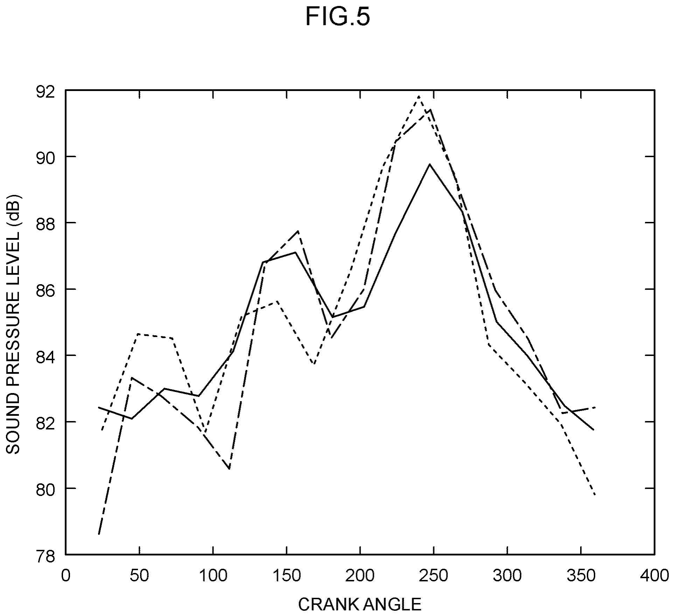

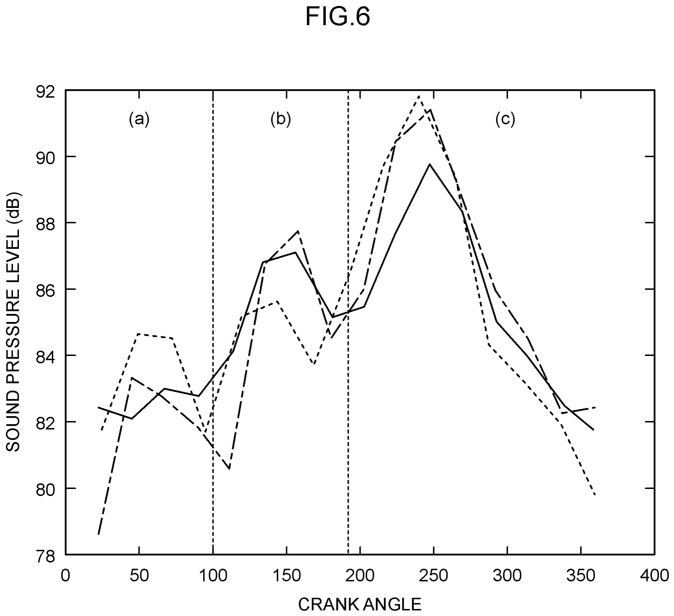

Although there is a possibility that the frequency of the operational sound is different in each of the above segments, since a period in which the workpiece is pressed is included, a large difference occurs in the sound pressure level of the operational sound. Therefore, it is desirable to divide the operational segments by focusing on the sound pressure level. FIG. 5 is a graph illustrating an example of the change in the sound pressure level of operational sounds in one frequency band with respect to the crank angle. FIG. 5 illustrates the change in the sound pressure level in three press operations. As illustrated in FIG. 5, peaks of the sound pressure level can be confirmed around crank angles of 50°, 150°, and 250°. Therefore, since a valley between peaks indicates a change point of the operational sound, the operational sound is divided into three operational sounds in the example illustrated in FIG. 5. A change point of the operational sound can be obtained from the data, and a machine learning method can be used for change point detection. In addition, as a method of classifying operational sounds, for example, a K-means algorithm can be used. The K-means algorithm is a method of classifying data into a plurality of predetermined clusters. In the example illustrated in FIG. 5, since there are three change points of the operational sound, an example in which the operational sound is classified into three is illustrated in FIGS. 6(a) to 6(c).

In this manner, when the operational sounds are classified, the number of divisions of the equipment operation is presumed in consideration of the equipment mechanism on the basis of the prior knowledge, the change points of the sound pressure data are calculated on the basis of the number of divisions presumed using the machine learning method or the clustering method, and the division positions are confirmed on the basis of the calculated change points. Note that data capable of expressing the characteristic of the operation or the change point information such as the load data (the above-described load cell data) may be used when division positions are determined in addition to the sound pressure data. Furthermore, in the above description, accurate segments of the operational segment are obtained by focusing on the sound pressure level of the specific frequency band; however, the final operational segments may be determined by performing similar processing for each of several candidates for the frequency band of interest.

As described above, operational segments having different characteristics can be accurately divided on the basis of a sensor signal that can identify a change point of the equipment operation (in the press equipment, a sensor signal such as the press load signal or the sound pressure level of the acoustic signal) among sensor signals installed in the target equipment or around the target equipment. Conditions obtained by dividing the operational segment determined in this manner by the time period since the start of the equipment and the operation position of the equipment (for example, the crank angle of the press equipment) may be registered in the extraction conditions database 18a in advance as extraction conditions. As a result, the processing of step S2 is completed, and the data recording processing proceeds to processing of step S3.

In the processing of step S3, first, the normal sound pressure level acquiring unit 13 converts the sound pressure signal for each operational segment extracted in the processing of step S2 into a sound pressure level with respect to the frequency using Fourier transform, an octave band filter, or the like. Next, the normal sound pressure level acquiring unit 13 reads, from the frequency band database 18b, information regarding I types ($I \geq 1$) of frequency bands (minimum value, maximum value, and the like of the frequency) to be used for abnormality detection predetermined for each operational segment. Then, the normal sound pressure level acquiring unit 13 acquires the sound pressure level (sound pressure level of normal operational sound) for each of the I types of frequency bands from the data of the converted sound pressure level using a bandpass filter or the like. For example, in the example illustrated in FIG. 3(c), the sound pressure level of the normal operational sound is acquired for each of predetermined frequency bands 1 to 3. As a result, the processing of step S3 is completed, and the data recording processing proceeds to processing of step S4.

In the processing of step S4, the normal-operation distribution determining and recording unit 14 classifies the sound pressure level of the normal operational sound acquired in the processing of step S3 for each operational segment and each frequency band and records the data of the sound pressure level distribution of the normal operational sound and the characteristic amount (average value, standard deviation, or the like) thereof in the normal-operation distribution database 18c. In addition, the normal-operation distribution determining and recording unit 14 may further classify the signal level of a normal operation signal for each operating condition in consideration of a plurality of operating conditions (for example, m types of operating conditions). As a result, the processing of step S4 is completed, and the series of data recording processing ends.

In the data recording processing, in addition to the data recording processing of the normal operational sound and the like, a data table in which the relationship between a deviation pattern from the normal time and an abnormal part described later is organized is stored in the deviation pattern database 18e in advance. Regarding the deviation pattern and the registered content thereof, the degree of deviation is defined in the following "abnormal part specifying processing", and the description will be added thereafter.

[Abnormal Part Specifying Processing]

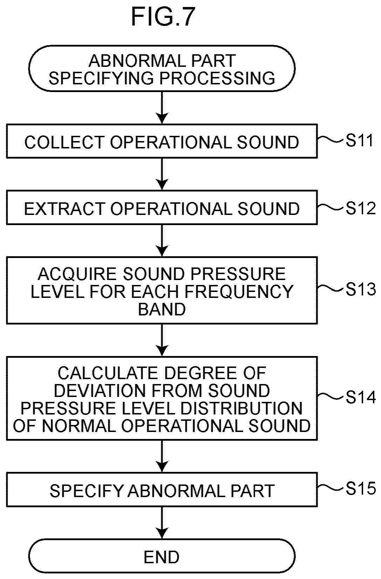

FIG. 7 is a flowchart illustrating the flow of abnormal part specifying processing as an embodiment of the present invention. The flowchart illustrated in FIG. 7 starts at the timing when an execution command of the abnormal part specifying processing is input to the acoustic diagnosis device 1, whereby the abnormal part specifying processing proceeds to processing of step S11.

In the processing of step S11, the operational sound collecting unit 11 collects the sound pressure signal of the operational sound of the equipment A within a predetermined period including k types ($k \geq 1$) of operational segments of the equipment A having been classified in advance using an acoustic sensor 20 installed in the vicinity of the equipment A at predetermined time intervals. As a result, the processing of step S11 is completed, and the abnormal part specifying processing proceeds to processing of step S12.

In the processing of step S12, the in-operational-segment operational sound extracting unit 12 extracts the sound pressure signal for each of the k types of operational segments from the sound pressure signal collected in the processing of step S11. Since the flow of the processing of step S12 is the same as the flow of the processing of step S2 described above, a detailed description thereof will be omitted. As a result, the processing of step S12 is completed, and the abnormal part specifying processing proceeds to processing of step S13.

In the processing of step S13, the sound pressure level acquiring unit 15 acquires the sound pressure level for each of the k types of operational segments and each of the l types of frequency bands from the sound pressure signal of the operational sound extracted in the processing of step S12. Since the flow of the processing of step S13 is the same as the flow of the processing of step S3 described above, a detailed description thereof will be omitted. Note that the sound pressure level acquiring unit 15 may read information regarding m types of operating conditions that affect the operation of the equipment A from the operating conditions database 18d and acquire the sound pressure level for each of the k types of operational segments, each of the l types of frequency bands, and for each of the m types of operating conditions. As a result, the processing of step S13 is completed, and the abnormal part specifying processing proceeds to processing of step S14.

In the processing of step S14, the degree-of-deviation calculating unit 16 reads information regarding the sound pressure level distribution during normal operation and the characteristic amount thereof from the normal-operation distribution database 18c for each of the k types of operational segments of the equipment A and each of the l types of frequency bands. Next, using the read information, the degree-of-deviation calculating unit 16 calculates two or more degrees of deviation of the sound pressure level of the operational sound acquired in the processing of step S13 with respect to the sound pressure level during the normal operation for each of the k types of operational segments and each of the l types of frequency bands. Then, the degree-of-deviation calculating unit 16 determines whether the equipment A is normal (0) or abnormal (1) using the calculated degrees of deviation for each of the degrees of deviation and generates an array pattern vector y' of the determination result (0 or 1) for each of the l types of frequency bands in each operational segment as a deviation pattern.

The degree of deviation can be calculated by, for example, the following Equation (1). Note that the sound pressure level measurement value in a target operational segment in a target frequency band may be a statistical value such as an average value of measurement values in the operational segment. In a case where the degree of deviation exceeds a predetermined threshold value after the calculation of the degrees of deviation, it is determined as being abnormal (1), and in other cases, it is determined as being normal (0). The threshold value may be determined on the basis of, for example, $3\sigma$ or the like that is about three times the standard deviation $\sigma$; however, the threshold value is not limited thereto and may be determined with adjustment along with observation of the characteristics of the operational data.

Degree of Deviation=

$$\frac{\left(\begin{array}{l}\text{Sound Pressure Level Measurement Value in Target Operational Segment in Target Frequency Band}\\ \text{- Sound Pressure Level Average Value in Target Operational Segment in Target Frequency Band during Normal Operation}\end{array}\right)}{\text{Standard Deviation of Sound Pressure Level in Target Operational Segment in Target Frequency Band during Normal Operation}}$$

$\cdots (1)$

In a case where the m types of operating conditions are taken into consideration in the processing of step S13, the degree-of-deviation calculating unit 16 calculates the degree of deviation with reference to a data table as illustrated in Table 1 below. The data table shown in Table 1 below indicates information regarding the sound pressure level distribution during normal operation and the characteristic amount thereof for each of the k types of operational segments, each of the l types of frequency bands, and each of the m types of operating conditions. The data table illustrated in Table 1 below corresponds to the content of the extraction conditions database 18a, the frequency band database 18b, the normal-operation distribution database 18c, and the operating conditions database 18d. As a result, the processing of step S14 is completed, and the abnormal part specifying processing proceeds to processing of step S15.

Table 1

| Operational Segment | | Frequency Band | | Operating Conditions | | | Sound Pressure Level Distribution of Associated Normal Operational Sound | |
|---|---|---|---|---|---|---|---|---|
| Segment Number | Operational Segment | Frequency Number | Frequency Band | Conditions Number | Steel Type | Amount of Reduction | Average Value | Standard Deviation |
| 1 | $t_1$ Seconds during Pressure Drop | 1 | $f_{11}$ to $f_{12}$Hz | 1 | A | $S_{11}$ to $S_{12}$ | x̄1 | σ1 |
| 1 | $t_1$ Seconds during Pressure Drop | 1 | $f_{11}$ to $f_{12}$Hz | 2 | A | $S_{12}$ to $S_{13}$ | x̄2 | σ2 |
| 1 | $t_1$ Seconds during Pressure Drop | 1 | $f_{11}$ to $f_{12}$Hz | 3 | A | $S_{13}$ to S14 | x̄3 | σ3 |
| 1 | ••• | 1 | ••• | ••• | ••• | ••• | ••• | ••• |
| 1 | ••• | 1 | ••• | m | ••• | ••• | x̄m | σm |
| 1 | ••• | ••• | ••• | ••• | ••• | ••• | ••• | ••• |
| 1 | ••• | $\ell$ | $f_{\ell1}$ to $f_{\ell2}$Hz | 1 | A | $S_{11}$ to $S_{12}$ | x̄1 | σ1 |
| 1 | ••• | $\ell$ | $f_{\ell1}$ to $f_{\ell2}$Hz | 2 | A | $S_{12}$ to $S_{13}$ | x̄2 | σ1 |
| 1 | ••• | $\ell$ | $f_{\ell1}$ to $f_{\ell2}$Hz | 3 | A | $S_{13}$ to S14 | x̄3 | σ3 |
| 1 | ••• | $\ell$ | ••• | ••• | ••• | ••• | ••• | ••• |
| 1 | ••• | $\ell$ | ••• | m | ••• | ••• | x̄m | σm |
| ••• | ••• | ••• | ••• | ••• | ••• | ••• | ••• | ••• |
| k | $t_k$ Seconds during Crank Rotation | $\ell$ | $f_{\ell1}$ to $f_{\ell2}$Hz | 1 | A | $S_{11}$ to $S_{12}$ | x̄1 | σ1 |
| k | $t_k$ Seconds during Crank Rotation | $\ell$ | $f_{\ell1}$ to $f_{\ell2}$Hz | 2 | A | $S_{12}$ to $S_{13}$ | x̄2 | σ2 |

(continued)

| Operational Segment | | Frequency Band | | Operating Conditions | | | Sound Pressure Level Distribution of Associated Normal Operational Sound | |
|---|---|---|---|---|---|---|---|---|
| Segment Number | Operational Segment | Frequency Number | Frequency Band | Conditions Number | Steel Type | Amount of Reduction | Average Value | Standard Deviation |
| k | $t_k$ Seconds during Crank Rotation | $\ell$ | $f_{\ell 1}$ to $f_{\ell 2}$Hz | 3 | A | $S_{13}$ to $S_{14}$ | x‾3 | σ3 |
| k | $t_k$ Seconds during Crank Rotation | $\ell$ | ••• | ••• | ••• | ••• | ••• | ••• |
| k | $t_k$ Seconds during Crank Rotation | $\ell$ | ••• | m | ••• | ••• | x‾m | σm |

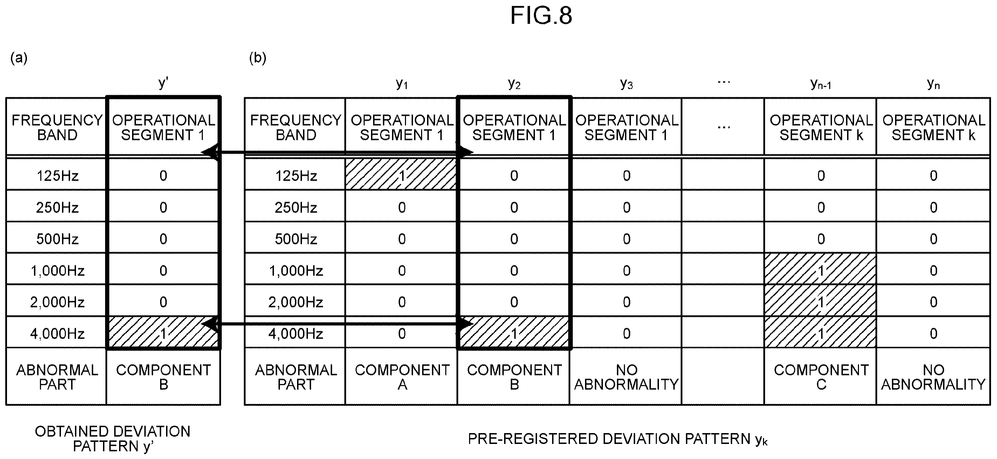

In the processing of step S15, the abnormal part specifying unit 17 specifies an abnormal part of the equipment A on the basis of the deviation pattern y' generated in the processing of step S14. Specifically, as illustrated in FIGS. 8(a) and 8(b), the abnormal part specifying unit 17 searches for a deviation pattern $y_k$ similar to the deviation pattern y' from a data table, registered in advance in the deviation pattern database 18e, the data table indicating the relationship between: operational segments and the deviation pattern $y_k$; and an abnormal part of the equipment A. The data table illustrated in FIG. 8(b) records the deviation pattern obtained when an abnormality of the equipment occurs, and is organized in association with the abnormal part. This data table is created in advance and stored in the deviation pattern database 18e by the normal-operation distribution determining and recording unit 14. In addition, the data table can be structured to specify an abnormal part on the basis of deviation patterns in consideration of m types of operating conditions in addition to the classification for each of the k types of operational segments and each of the l types of frequency bands. Therefore, the abnormal part specifying unit 17 may specify an abnormal part of the equipment A further in consideration of the m types of operating conditions.

Note that the abnormal part specifying unit 17 desirably calculates the similarity of the deviation pattern y' to the deviation pattern $y_k$ using the Euclidean distance as expressed in the following Equation (2) and searches for the similar deviation pattern $y_k$ on the basis of the calculated similarity. The value of the degree of similarity expressed by Equation (2) approaches 1 as the deviation pattern y' is more similar to the deviation pattern $y_k$. Then, the abnormal part specifying unit 17 reads information regarding an abnormal part of the equipment A corresponding to the searched deviation pattern $y_k$. For example, in the example illustrated in FIGS. 8(a) and 8(b), since the deviation pattern y' generated in the processing of step S14 coincides with a deviation pattern $y_2$, the abnormal part specifying unit 17 specifies a component B corresponding to the deviation pattern $y_2$ as an abnormal part of the equipment A. As a result, the processing of step S15 is completed, and the series of abnormal part specifying processing ends.

$$\text{Similarity} = \frac{1}{1 + |y' - y_k|} \quad \cdots (2)$$

As is clear from the above description, the acoustic diagnosis device 1 according to the embodiment of the present invention includes: the operational sound collecting unit 11 that collects the operational sound of the equipment A; the in-operational-segment operational sound extracting unit 12 that extracts operational sound for each predetermined operational segment of the equipment A from the operational sound collected by the operational sound collecting unit 11; the sound pressure level acquiring unit 15 that acquires the sound pressure level for each predetermined frequency band for each operational segment with respect to the operational sound for each operational segment extracted by the in-operational-segment operational sound extracting unit 12; the degree-of-deviation calculating unit 16 that calculates the degree of deviation of the sound pressure level for each operational segment and each frequency band acquired by the sound pressure level acquiring unit 15 from the sound pressure level of the same equipment, the same operational segment, and the same frequency band during normal operation; and the abnormal part specifying unit 17 that specifies an abnormal part of the equipment on the basis of the degree of deviation calculated by the degree-of-deviation calculating unit 16. According to such a configuration, an abnormal part of the equipment A is specified on the basis of the sound pressure level for each operational segment and each frequency band of the equipment A, and thus the abnormal part of the equipment A can be accurately specified. In addition, this makes it possible to take measures such as quick adjustment and/or repair or replacement processing of the abnormal part, whereby it is possible to suppress deterioration in the quality and quality defects of the manufactured product. This can also contribute to improvement of the product yield.

The acoustic diagnosis device 1 according to an embodiment of the present invention further includes: with respect to the operational sound of the operational segment during normal operation of the equipment A that has been extracted by the in-operational-segment operational sound extracting unit 12, the normal sound pressure level acquiring unit 13 that acquires the sound pressure level for each of predetermined frequency bands for each of the operational segments; and the normal-operation distribution determining and recording unit 14 that classifies the sound pressure level acquired by the normal sound pressure level acquiring unit 13 for each of the equipment, each of the operational segments, and each of the frequency bands and records the classified sound pressure level as the sound pressure level during the normal operation of the equipment A and records the table in which, for each operational segment, the deviation patterns for each frequency band are associated with abnormal parts, the deviation patterns and the abnormal parts obtained when abnormalities of the equipment A have occurred. According to such a configuration, with respect to the operational sound during the normal operation of the equipment A, the sound pressure level for each equipment, each operational segment, and each frequency band, as well as the table in which deviation patterns obtained when abnormalities have occurred and abnormal parts are associated with each other are recorded. As a result, even when the normal operational sound is changed, the recording processing is newly performed on the normal operational sound, and the abnormal part of the equipment A is specified based on the sound pressure level for each operational segment and each frequency band with reference to the new operational sound data during normal operation, so that the abnormal part of the equipment A can be specified with high accuracy.

In addition, since the acoustic diagnosis device 1 according to an embodiment of the present invention specifies an abnormal part of the equipment A also in consideration of the operating conditions of the equipment A, it is possible to accurately specify the abnormal part of the equipment A. That is, in general, in steel manufacturing equipment such as press equipment and rolling equipment, operating conditions such as the rolling amount and the material change even during normal operation, and accordingly, the magnitude and the frequency of the operational sound vary. For this reason, the normal range of the magnitude and the frequency of the operational sound is widened, and the magnitude and the frequency of the abnormal sound are buried in the normal range. As a result, an abnormality of the equipment may not be accurately detected only by the magnitude or the frequency of the operational sound. On the other hand, the acoustic diagnosis device 1 according to an embodiment of the present invention specifies an abnormal part of the equipment A also in consideration of the operating conditions of the equipment A, and thus it is possible to accurately specify the abnormal part of the equipment A. Examples

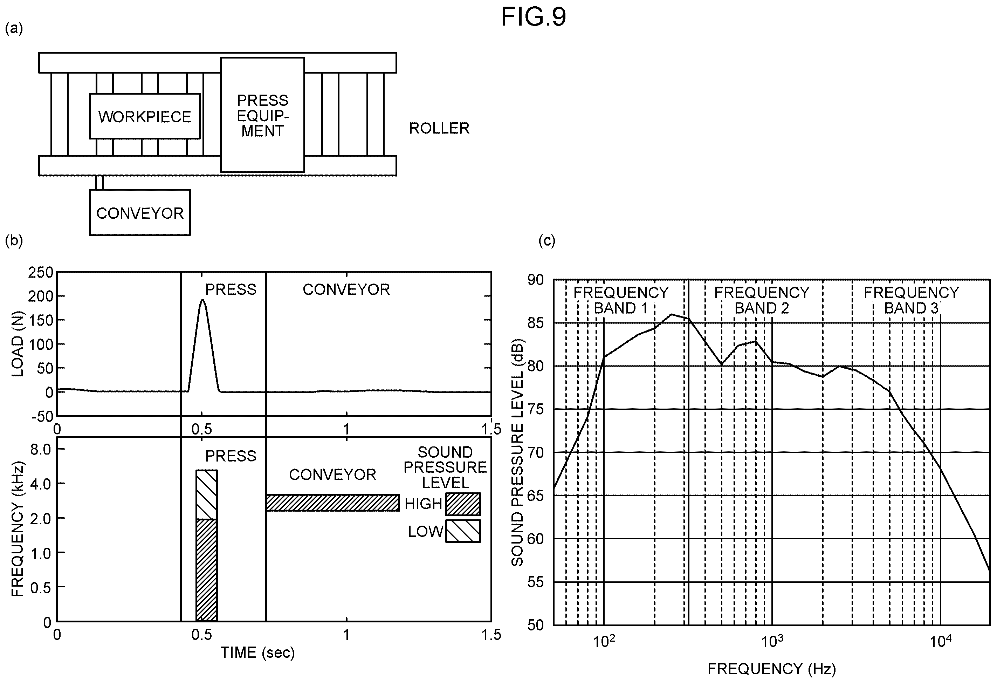

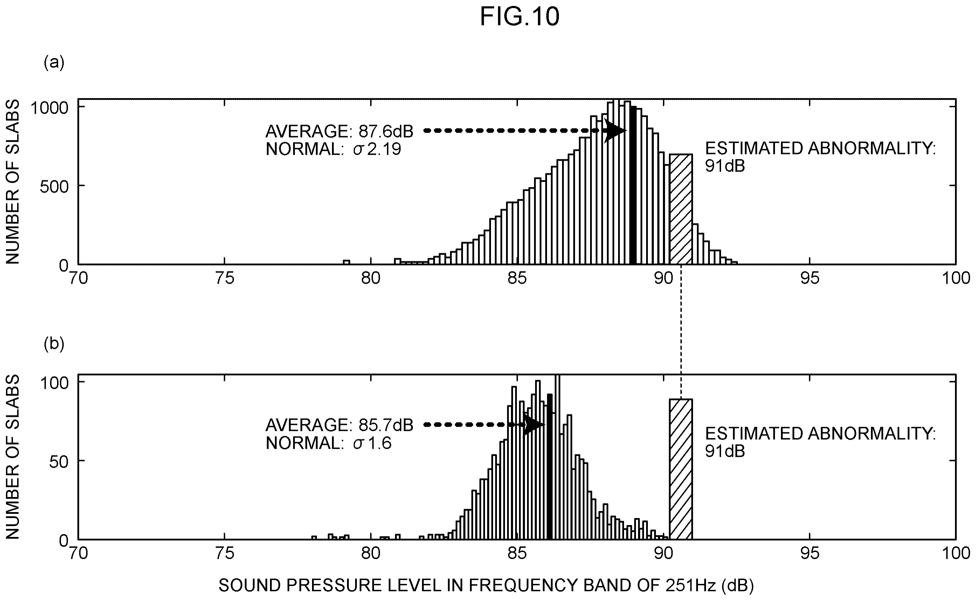

In the present example, an abnormal part of press equipment illustrated in FIG. 9(a) was specified. When an acoustic sensor is installed around the press equipment illustrated in FIG. 9(a), as illustrated in FIG. 9(b), a spectrum of impact sound can be acquired at the moment when a press load is generated, and operational sound of a conveyor can be acquired during operation of the conveyor after the press is completed. In the present example, the range of the frequency distribution of the sound pressure level during normal operation of the press equipment was narrowed by considering operating conditions of the press equipment, whereby an abnormal part of the press equipment was specified. FIG. 10(a) shows a frequency distribution (average value of 87.6 dB and standard deviation of $\sigma$2.19) of the sound pressure level in a case where the operating conditions of the press equipment are not limited, and FIG. 10(b) shows a frequency distribution (average value of 85.7 dB and standard deviation of $\sigma$1.6) of the sound pressure level in a case where the operating conditions of the press equipment are limited.

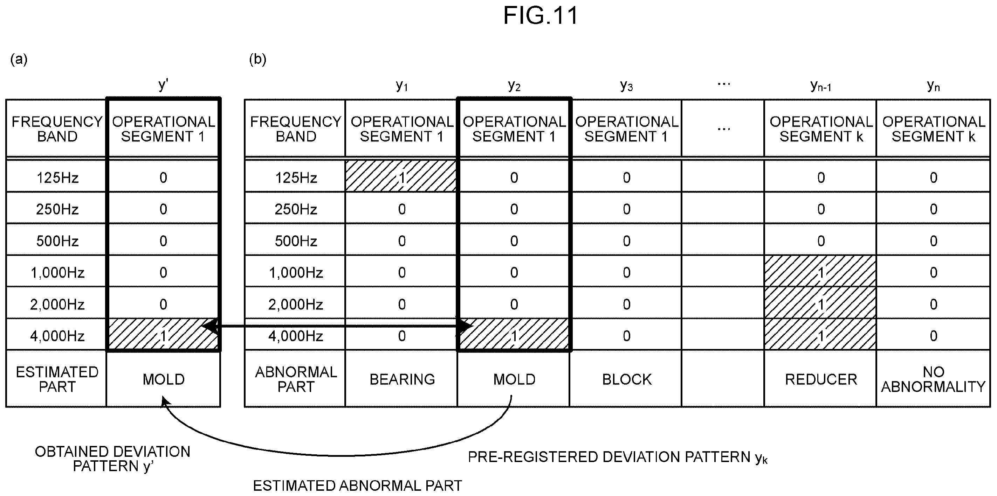

Next, the degree of deviation of the press equipment in a case where the sound pressure level was 91dB was calculated assuming a mold abnormality. The degree of deviation of the press equipment was calculated using the following Equation (3). As a result, in the case where the operating conditions were not limited, the degree of deviation of the press equipment when the sound pressure level was 91 dB was calculated to be 1.5, and in the case where the operating conditions were limited, the degree of deviation of the press equipment when the sound pressure level was 91 dB was calculated to be 3.3. Therefore, setting the threshold value, of the degree of deviation for determining that an abnormality has occurred in the press equipment, to 3 makes it possible to accurately determine an abnormality in the press equipment. In addition, as illustrated in FIG. 11, by searching for a deviation pattern similar to a deviation pattern calculated from the deviation pattern registered in advance, it was possible to accurately determine that the abnormal part of the equipment was the mold.

$$\text{Degree of Deviation} = \frac{(\text{Monitoring Target Value} - \text{Average Value during Normal Operation})}{\text{Standard Deviation during Normal Operation}}$$

$$\cdots (3)$$

Although the embodiments applied with the invention devised by the present inventors have been described above, the present invention is not limited by the description and the drawings included as a part of the disclosure of the present invention according to the embodiments. That is, other embodiments, examples, operation technology, and the like implemented by those skilled in the art on the basis of the present embodiments are all included in the scope of the invention.

Industrial Applicability

According to the present invention, it is possible to provide an acoustic diagnosis device and an acoustic diagnosis method capable of accurately specifying an abnormal part of equipment.

Reference Signs List

1 ACOUSTIC DIAGNOSIS DEVICE
11 OPERATIONAL SOUND COLLECTING UNIT
12 IN-OPERATIONAL-SEGMENT OPERATIONAL SOUND EXTRACTING UNIT
13 NORMAL SOUND PRESSURE LEVEL ACQUIRING UNIT
14 NORMAL-OPERATION DISTRIBUTION DETERMINING AND RECORDING UNIT
15 SOUND PRESSURE LEVEL ACQUIRING UNIT
16 DEGREE-OF-DEVIATION CALCULATING UNIT
17 ABNORMAL PART SPECIFYING UNIT
18 DATABASE UNIT
18a EXTRACTION CONDITIONS DATABASE
18b FREQUENCY BAND DATABASE
18c NORMAL-OPERATION DISTRIBUTION DATABASE
18d OPERATING CONDITIONS DATABASE
18e DEVIATION PATTERN DATABASE
20 ACOUSTIC SENSOR
A DIAGNOSIS TARGET EQUIPMENT

## Claims

1.  An acoustic diagnosis device that specifies an abnormal part of equipment using an acoustic signal during operation of the equipment, the acoustic diagnosis device comprising:

    an operational sound collecting unit that collects operational sound of the equipment;
    an in-operational-segment operational sound extracting unit that extracts operational sound for each of predetermined operational segments of the equipment from the operational sound collected by the operational sound collecting unit;
    a sound pressure level acquiring unit that acquires a sound pressure level for each of predetermined frequency bands for each of the operational segments with respect to operational sound for each of the operational segments extracted by the in-operational-segment operational sound extracting unit;
    a degree-of-deviation calculating unit that calculates a degree of deviation of the sound pressure level for each of the operational segments and each of the frequency bands acquired by the sound pressure level acquiring unit from a sound pressure level during a normal operation of the same equipment, a same operational segment, and a same frequency band; and
    an abnormal part specifying unit that specifies an abnormal part of the equipment on a basis of the degree of deviation calculated by the degree-of-deviation calculating unit.

2.  The acoustic diagnosis device according to claim 1, wherein

the sound pressure level acquiring unit acquires the sound pressure level by classifying each of operational sounds on a basis of predetermined operating conditions of the equipment, and
the degree-of-deviation calculating unit calculates the degree of deviation of the sound pressure level for each of the operational segments, each of the frequency bands, and each of the operating conditions acquired by the sound pressure level acquiring unit from the sound pressure level during the normal operation of the same equipment, the same operational segment, the same frequency band, and a same operating condition.

3. The acoustic diagnosis device according to claim 1 or 2, wherein the abnormal part specifying unit specifies the abnormal part of the equipment on a basis of a pattern of deviations having the degree of deviation in each of the frequency bands obtained for each of the operational segments as an element.

4. The acoustic diagnosis device according to claim 3, further comprising

a database unit that stores:

a collection condition for collecting the operational sound of the equipment; and
data necessary for specifying the abnormal part of the equipment,

wherein the abnormal part specifying unit specifies the abnormal part of the equipment by referring to a table stored in the database unit, the table including information indicating a relationship between:

the operational segments and the pattern of deviations; and
abnormal parts of the equipment.

5. The acoustic diagnosis device according to claim 4, wherein
the table includes information indicating a relationship between:

the operational segments, the pattern of deviations, and operating conditions of the equipment; and
abnormal parts of the equipment, and
the abnormal part specifying unit specifies the abnormal part of the equipment in consideration of the operational segments, the pattern of deviations, and the operating conditions of the equipment by referring to the table.

6. The acoustic diagnosis device according to any one of claims 1 to 5, further comprising:

a normal sound pressure level acquiring unit that acquires a sound pressure level for each of predetermined frequency bands for each of the operational segments with respect to the operational sound for each of the operational segments extracted by the in-operational-segment operational sound extracting unit; and
a normal-operation distribution determining and recording unit that classifies the sound pressure level acquired by the normal sound pressure level acquiring unit for each of the equipment, each of the operational segments, and each of the frequency bands and records the classified sound pressure level as the sound pressure level during the normal operation of the equipment.

7. The acoustic diagnosis device according to claim 6, wherein the normal-operation distribution determining and recording unit records, for each of the equipment, a table including information indicating a relationship between:

the pattern of deviations, the pattern of deviations having, as an element, a degree of deviation of a sound pressure level from the sound pressure level during the normal operation in each of the frequency bands obtained for each of the operational segments; and
the abnormal parts of the equipment.

8. The acoustic diagnosis device according to claim 7, wherein the normal-operation distribution determining and recording unit records a table including information indicating a relationship between:

the operational segments, the pattern of deviations, and the operating conditions of the equipment; and
the abnormal parts of the equipment.

9. The acoustic diagnosis device according to any one of claims 1 to 8, wherein the operational segments are determined in association with operation time of the equipment or an operation position of a component device of the equipment.

10. The acoustic diagnosis device according to any one of claims 1 to 8, wherein the operational segments are determined, for a sensor signal installed in the equipment, the sensor being capable of identifying a change point of operation of the equipment, on a basis of confirmation of division positions by:

designation of an assumed value of a number of divisions based on knowledge about operation of the equipment; and
change point extraction by a machine learning method using data of the sensor signal or change point extraction by data classification by a clustering technique.

11. An acoustic diagnosis method for specifying an abnormal part of equipment using an acoustic signal during operation of the equipment, the acoustic diagnosis method comprising:

an operational sound collecting step of collecting operational sound of the equipment;
an in-operational-segment operational sound extracting step of extracting operational sound for each of predetermined operational segments of the equipment from the operational sound collected in the operational sound collecting step;
a sound pressure level acquiring step of acquiring a sound pressure level for each of predetermined frequency bands for each of the operational segments with respect to operational sound for each of the operational segments extracted in the in-operational-segment operational sound extracting step;
a degree-of-deviation calculating step of calculating a degree of deviation of the sound pressure level for each of the operational segments and each of the frequency bands acquired in the sound pressure level acquiring step from a sound pressure level during a normal operation of the same equipment, a same operational segment, and a same frequency band; and
an abnormal part specifying step of specifying an abnormal part of the equipment on a basis of the degree of deviation calculated in the degree-of-deviation calculating step.

12. The acoustic diagnosis method according to claim 11, further comprising:

a normal sound pressure level acquiring step of acquiring a sound pressure level for each of predetermined frequency bands for each of the operational segments with respect to the operational sound for each of the operational segments extracted in the in-operational-segment operational sound extracting step; and
a normal-operation distribution determining and recording step of classifying the sound pressure level acquired in the normal sound pressure level acquiring step for each of the equipment, each of the operational segments, and each of the frequency bands and recording the classified sound pressure level as the sound pressure level during the normal operation of the equipment.

# FIG.1

DIAGNOSIS TARGET EQUIPMENT ⌇A

ACOUSTIC SENSOR ⌇20

ACOUSTIC DIAGNOSIS DEVICE ⌇1

OPERATIONAL SOUND COLLECTING UNIT ⌇11

IN-OPERATIONAL-SEGMENT OPERATIONAL SOUND EXTRACTING UNIT ⌇12

SOUND PRESSURE LEVEL ACQUIRING UNIT ⌇15

NORMAL SOUND PRESSURE LEVEL ACQUIRING UNIT ⌇13

DEGREE-OF-DEVIATION CALCULATING UNIT ⌇16

NORMAL-OPERATION DISTRIBUTION DETERMINING AND RECORDING UNIT ⌇14

ABNORMAL PART SPECIFYING UNIT ⌇17

DATABASE UNIT ⌇18

EXTRACTION CONDITIONS DATABASE ⌇18a

FREQUENCY BAND DATABASE ⌇18b

NORMAL-OPERATION DISTRIBUTION DATABASE ⌇18c

OPERATING CONDITIONS DATABASE ⌇18d

DEVIATION PATTERN DATABASE ⌇18e

EP 4 700 345 A1

# FIG.2

```
      DATA RECORDING
        PROCESSING
             │
             ▼
   COLLECT OPERATIONAL SOUND        ⟩~S1
             │
             ▼
   EXTRACT OPERATIONAL SOUND        ⟩~S2
             │
             ▼
   ACQUIRE SOUND PRESSURE
   LEVEL OF NORMAL OPERATIONAL      ⟩~S3
        SOUND
             │
             ▼
  RECORD SOUND PRESSURE LEVEL
  DISTRIBUTION OF NORMAL
  OPERATIONAL SOUND AND
  CHARACTERISTIC AMOUNT OF          ⟩~S4
  SOUND PRESSURE LEVEL
        DISTRIBUTION
             │
             ▼
           END
```

FIG.3

(a)

(c)

EP 4 700 345 A1

# FIG.4

# FIG.5

# FIG.6

# FIG.7

```
    ┌──────────────────────────┐
    │      ABNORMAL PART        │
    │  SPECIFYING PROCESSING    │
    └──────────────────────────┘
                 │
                 ▼
    ┌──────────────────────────┐
    │ COLLECT OPERATIONAL SOUND │───S11
    └──────────────────────────┘
                 │
                 ▼
    ┌──────────────────────────┐
    │ EXTRACT OPERATIONAL SOUND │───S12
    └──────────────────────────┘
                 │
                 ▼
    ┌──────────────────────────┐
    │  ACQUIRE SOUND PRESSURE   │
    │  LEVEL FOR EACH FREQUENCY │───S13
    │           BAND            │
    └──────────────────────────┘
                 │
                 ▼
    ┌──────────────────────────────┐
    │    CALCULATE DEGREE OF        │
    │  DEVIATION FROM SOUND         │
    │ PRESSURE LEVEL DISTRIBUTION   │───S14
    │ OF NORMAL OPERATIONAL SOUND   │
    └──────────────────────────────┘
                 │
                 ▼
    ┌──────────────────────────┐
    │   SPECIFY ABNORMAL PART   │───S15
    └──────────────────────────┘
                 │
                 ▼
    ┌──────────────────────────┐
    │           END            │
    └──────────────────────────┘
```

# FIG.8

(a)

(b)

**OBTAINED DEVIATION PATTERN y' (a):**

| | y' |
|---|---|
| FREQUENCY BAND | OPERATIONAL SEGMENT 1 |
| 125Hz | 0 |
| 250Hz | 0 |
| 500Hz | 0 |
| 1,000Hz | 0 |
| 2,000Hz | 0 |
| 4,000Hz | 1 |
| ABNORMAL PART | COMPONENT B |

OBTAINED DEVIATION PATTERN y'

**PRE-REGISTERED DEVIATION PATTERN $y_k$ (b):**

| | $y_1$ | $y_2$ | $y_3$ | ... | $y_{n-1}$ | $y_n$ |
|---|---|---|---|---|---|---|
| FREQUENCY BAND | OPERATIONAL SEGMENT 1 | OPERATIONAL SEGMENT 1 | OPERATIONAL SEGMENT 1 | ... | OPERATIONAL SEGMENT k | OPERATIONAL SEGMENT k |
| 125Hz | 1 | 0 | 0 | | 0 | 0 |
| 250Hz | 0 | 0 | 0 | | 0 | 0 |
| 500Hz | 0 | 0 | 0 | | 0 | 0 |
| 1,000Hz | 0 | 0 | 0 | | 1 | 0 |
| 2,000Hz | 0 | 0 | 0 | | 1 | 0 |
| 4,000Hz | 0 | 1 | 0 | | 1 | 0 |
| ABNORMAL PART | COMPONENT A | COMPONENT B | NO ABNORMALITY | | COMPONENT C | NO ABNORMALITY |

PRE-REGISTERED DEVIATION PATTERN $y_k$

EP 4 700 345 A1

# FIG.9

(a)

WORKPIECE

PRESS EQUIP-MENT

ROLLER

CONVEYOR

(b)

(c)

EP 4 700 345 A1

# FIG.10

(a)

AVERAGE: 87.6dB
NORMAL: σ2.19

ESTIMATED ABNORMALITY:
91dB

(b)

AVERAGE: 85.7dB
NORMAL: σ1.6

ESTIMATED ABNORMALITY:
91dB

SOUND PRESSURE LEVEL IN FREQUENCY BAND OF 251Hz (dB)

EP 4 700 345 A1

# FIG.11

(a)

|  | y' |
|---|---|
| FREQUENCY BAND | OPERATIONAL SEGMENT 1 |
| 125Hz | 0 |
| 250Hz | 0 |
| 500Hz | 0 |
| 1,000Hz | 0 |
| 2,000Hz | 0 |
| 4,000Hz | 1 |
| ESTIMATED PART | MOLD |

(b)

|  | $y_1$ | $y_2$ | $y_3$ | ... | $y_{n-1}$ | $y_n$ |
|---|---|---|---|---|---|---|
| FREQUENCY BAND | OPERATIONAL SEGMENT 1 | OPERATIONAL SEGMENT 1 | OPERATIONAL SEGMENT 1 | ... | OPERATIONAL SEGMENT k | OPERATIONAL SEGMENT k |
| 125Hz | 1 | 0 | 0 |  | 0 | 0 |
| 250Hz | 0 | 0 | 0 |  | 0 | 0 |
| 500Hz | 0 | 0 | 0 |  | 0 | 0 |
| 1,000Hz | 0 | 0 | 0 |  | 1 | 0 |
| 2,000Hz | 0 | 0 | 0 |  | 1 | 0 |
| 4,000Hz | 0 | 1 | 0 |  | 1 | 0 |
| ABNORMAL PART | BEARING | MOLD | BLOCK |  | REDUCER | NO ABNORMALITY |

OBTAINED DEVIATION PATTERN y'

PRE-REGISTERED DEVIATION PATTERN $y_k$

ESTIMATED ABNORMAL PART

EP 4 700 345 A1

## INTERNATIONAL SEARCH REPORT

| International application No. |
|---|
| **PCT/JP2024/018942** |

**A. CLASSIFICATION OF SUBJECT MATTER**

*G01H 17/00*(2006.01)i; *G01M 99/00*(2011.01)i
FI: G01H17/00 C; G01M99/00 Z

According to International Patent Classification (IPC) or to both national classification and IPC

**B. FIELDS SEARCHED**

Minimum documentation searched (classification system followed by classification symbols)

G01H1/0017/00; G01M13/00-13/045; G01M99/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2017-32488 A (RICOH COMPANY, LTD.) 09 February 2017 (2017-02-09) paragraphs [0009]-[0014], fig. 1-4 | 1-12 |
| A | JP 2022-86643 A (TOPPAN PRINTING CO., LTD.) 09 June 2022 (2022-06-09) paragraphs [0019]-[0049], fig. 1-3 | 1-12 |
| A | JP 2013-19741 A (TOYOTA MOTOR EAST JAPAN INC.) 31 January 2013 (2013-01-31) paragraphs [0026]-[0055], fig. 1-4 | 1-12 |
| A | JP 2021-148457 A (JTEKT CORP.) 27 September 2021 (2021-09-27) paragraphs [0010]-[0076], fig. 1-6 | 1-12 |
| A | CN 115200699 A (CHINA CONSTRUCTION SEVENTH ENGINEERING DIVISION CORP. LTD.) 18 October 2022 (2022-10-18) paragraphs [0055]-[0063], fig. 1 | 1-12 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **29 July 2024** | **13 August 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

**INTERNATIONAL SEARCH REPORT**
Information on patent family members

| International application No. |
| --- |
| **PCT/JP2024/018942** |

| Patent document cited in search report | | | Publication date (day/month/year) | Patent family member(s) | Publication date (day/month/year) |
| --- | --- | --- | --- | --- | --- |
| JP | 2017-32488 | A | 09 February 2017 | (Family: none) | |
| JP | 2022-86643 | A | 09 June 2022 | (Family: none) | |
| JP | 2013-19741 | A | 31 January 2013 | (Family: none) | |
| JP | 2021-148457 | A | 27 September 2021 | (Family: none) | |
| CN | 115200699 | A | 18 October 2022 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008164490 A
- WO 2019017345 A
- WO 2020157818 A